(19) Europäisches Patentamt
European Patent Office
Office européen des brevets

(11) **EP 4 266 030 B1**

(12) **EUROPEAN PATENT SPECIFICATION**

(45) Date of publication and mention
of the grant of the patent:
**22.07.2026 Bulletin 2026/30**

(21) Application number: **21922885.5**

(22) Date of filing: **29.01.2021**

(51) International Patent Classification (IPC):
**G01N 22/00** $^{(2006.01)}$     **G01S 13/90** $^{(2006.01)}$
**G01S 13/38** $^{(2006.01)}$

(52) Cooperative Patent Classification (CPC):
**G01S 13/9088; G01N 22/00; G01S 13/38;
G01S 13/9064; G01S 13/9089;** G01S 13/887

(86) International application number:
**PCT/JP2021/003238**

(87) International publication number:
**WO 2022/162869 (04.08.2022 Gazette 2022/31)**

(54) **OBJECT-PENETRATING VISUALIZATION DEVICE, CONTROL CIRCUIT, STORAGE MEDIUM, AND OBJECT-PENETRATING VISUALIZATION METHOD**

OBJEKTPENETRIERENDE VISUALISIERUNGSVORRICHTUNG, STEUERSCHALTUNG, SPEICHERMEDIUM UND OBJEKTPENETRIERENDES VISUALISIERUNGSVERFAHREN

DISPOSITIF DE VISUALISATION PAR PÉNÉNATRATION D'OBJET, CIRCUIT DE COMMANDE, SUPPORT DE STOCKAGE ET PROCÉDÉ DE VISUALISATION PAR PÉNÉNATRATION D'OBJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.10.2023 Bulletin 2023/43**

(73) Proprietor: **MITSUBISHI ELECTRIC CORPORATION**
Chiyoda-ku
Tokyo 100-8310 (JP)

(72) Inventors:
• **HAYAMA, Michiya**
Tokyo 100-8310 (JP)
• **TAIRA, Akinori**
Tokyo 100-8310 (JP)
• **ISHIOKA, Kazuaki**
Tokyo 100-8310 (JP)

(74) Representative: **Pfenning, Meinig & Partner mbB**
**Patent- und Rechtsanwälte**
**Joachimsthaler Straße 10-12**
**10719 Berlin (DE)**

(56) References cited:
JP-A- 2005 328 853     JP-A- H07 120 548
US-A1- 2005 237 056     US-A1- 2007 222 671
US-A1- 2019 179 007

• "Generalized Focused Imaging ED - Dean L Mensa", 1 January 1991, HIGH RESOLUTION RADAR CROSS-SECTION IMAGING, ARTECH HOUSE, BOSTON, US, PAGE(S) 182 - 199, ISBN: 978-0-89006-389-7, XP007914929
• "High Resolution Radar Cross-Section Imaging", 1 January 1991, ARTECH HOUSE, ISBN: 978-0-89-006389-7, article DEAN L. MENSA: "3.1.2 Stepped-Frequency CW-Systems", pages: 52 - 55, XP055038004
• YULEI QIAN: "SAR Image Formation From Azimuth Periodically Gapped Raw Data Via Complex ISTA", IEEE CONFERENCE PROCEEDINGS OF ASIAN AND PACIFIC CONFERENCE ON SYNTHETIC APERTURE RADAR (APSAR, vol. 2019, no. APSAR, 2019, pages 1 - 5, XP033751297, DOI: 10.1109/ APSAR46974.2019.9048466

EP 4 266 030 B1

- **WAKAYAMA, TOSHIO: "Technical Trends in Synthetic Aperture Radars.", THE JOURNAL OF THE INSTITUTE OF ELECTRONICS, INFORMATION AND COMMUNICATION ENGINEERS, vol. 95, no. 2, 30 November 2011 (2011-11-30), pages 142 - 144, XP009538965, ISSN: 2188-2355**

**Description**

Field

The present disclosure relates to an object scanning device, a control circuit, a storage medium, and an object scanning method for scanning an object.

Background

An object scanning device that performs imaging of an object using a matched filter (MF) is a type of device that radiates millimeter waves, terahertz waves, or the like to an object that is a measurement subject, and scan (or sees through) the object using reflected waves from the object. This object scanning device radiates radio waves to an object while moving the transmission and reception antennas for measurement according to a predetermined path, receives reflected waves from scattering points of the object, and records time-series data of the reflected waves.

The object scanning device generates the reception waveform, i.e. the waveform of the reception signal, by superimposing the reflected waves having various waveforms received from various scattering points. Here, if the positional relationship between the measurement area and the transmission and reception antennas is known, the object scanning device can estimate the waveform of the reflected wave from the scattering point at given coordinates on the measurement area. When performing MF-based imaging, the object scanning device comprehensively provides observation points in the measurement area, generates an estimated waveform of a reflected wave for each observation point, and correlates the estimated waveform with the reception waveform, thereby mapping the reflection intensity from each observation point. In this case, the correlation value between the estimated waveform and the reception waveform is obtained as a correlation vector having phase information. That is, the correlation vector indicates the correlation between the estimated waveform and the reception waveform and has phase information. The object scanning device can obtain a high correlation value when the observation point and the scattering point are close to each other, and can obtain a low correlation value when the scattering point does not exist near the observation point.

When performing MF-based imaging, the object scanning device can reduce side lobes due to the arrangement of the transmission and reception antennas and scattering objects around the measurement area by repeating the same measurement using radio waves of a plurality of frequencies. As methods for composing images measured with radio waves of a plurality of frequencies, there are a method of power composing type that performs integration of the magnitude of correlation vectors for each pixel and a method of phase composing type that performs complex addition in which phase information for each pixel is considered.

The method of phase composing type can produce a higher side lobe reduction effect than the method of power composing type, but may result in cancellation of correlation vectors at the time of complex addition unless the phases of the correlation vectors of the same observation point measured with radio waves of different frequencies are accurately matched. Therefore, the method of phase composing type requires signal processing in which information on the positional relationship between the observation points and the transmission and reception antennas or the influence of the frequency characteristics of the measurement system is considered.

A possible way to implement phase composing is to estimate or preliminarily measure by some means a phase offset that occurs when a certain pixel is measured with radio waves of different frequencies, and subtract the phase offset from the measurement result for phase correction. The millimeter wave image processing device described in Patent Literature 1 includes a signal processing device that performs signal processing of a signal received using an antenna, and a calibration signal generation device disposed in the outside of the signal processing device. The calibration signal generation device acquires phase offset information that is applied to the signal processing device, and the signal processing device corrects the phase of radio waves received by the antenna using the phase offset information. Patent Literature 2 addresses a system and method for forming synthetic aperture radar images. Patent Literature 3 concerns an image generating method and a Magnetic Resonance Imaging (MRI) apparatus. In Patent Literature 4, a millimeter wave image processor and a millimeter wave image processing method are described.

Citation List

Patent Literature

Patent Literature 1: Japanese Patent Application Laid-open No. 2007-256171
Patent Literature 2: United States Patent Application Laid-open No. 2019/179007 A1
Patent Literature 3: United States Patent Application Laid-open No. 2005/237056 A1

Patent Literature 4: United States Patent Application Laid-open No. 2007/222671 A1

Summary

Technical Problem

However, the technique of Patent Literature 1, which requires the calibration signal generation device, is problematic in terms of device configuration complexity.

The present disclosure has been made in view of the above, and an object thereof is to obtain an object scanning device capable of accurately scanning an object with a simple configuration even under an environment where an accurate distance to the object cannot be measured.

Solution to Problem

In order to solve the above problem and achieve the object, the present invention proposes an object scanning device and an object scanning method according to the independent claims. Particular embodiments of the present invention are specified in the dependent claims.

Advantageous Effects of Invention

The object scanning device and the object scanning method according to the present invention can achieve the effect of accurately scanning an object with a simple configuration even under an environment where an accurate distance to the object cannot be measured.

Brief Description of Drawings

FIG. 1 is a diagram illustrating a configuration of an object scanning device according to a first embodiment.
FIG. 2 is a diagram for explaining another example of an antenna moving path applied by the object scanning device according to the first embodiment.
FIG. 3 is a diagram for explaining a process of generating a reception signal by the object scanning device according to the first embodiment.
FIG. 4 is a diagram for explaining observation points set by the object scanning device according to the first embodiment.
FIG. 5 is a diagram for explaining the correlation between estimated waveforms of reflected waves and a reception waveform calculated by the object scanning device according to the first embodiment.
FIG. 6 is a diagram for explaining an update pattern for the frequencies of high frequency signals used by the object scanning device according to the first embodiment.
FIG. 7 is a diagram for explaining a configuration of the quadrature detection unit provided in the object scanning device according to the first embodiment.
FIG. 8 is a diagram illustrating a configuration of the waveform recording unit provided in the object scanning device according to the first embodiment.
FIG. 9 is a diagram for explaining a process of generating a power composite image by the power composite image generation unit provided in the object scanning device according to the first embodiment.
FIG. 10 is a diagram for explaining a process of calculating a correction phase at each frequency by the correction phase calculation unit provided in the object scanning device according to the first embodiment.
FIG. 11 is a diagram for explaining a process of generating a phase composite image by the phase composite image generation unit provided in the object scanning device according to the first embodiment.
FIG. 12 is a flowchart illustrating a procedure for generating a phase composite image by the object scanning device according to the first embodiment.
FIG. 13 is a diagram illustrating a configuration of an object scanning device according to a second embodiment.
FIG. 14 is a flowchart illustrating a procedure for generating a phase composite image by an object scanning device according to a third embodiment.
FIG. 15 is a diagram for explaining combinations that are sets of observation coordinates and the sum of Euclidean distances in each combination calculated by the object scanning device according to the third embodiment.
FIG. 16 is a diagram illustrating an exemplary configuration of processing circuitry in the case that the processing circuitry provided in the object scanning device according to the first embodiment is implemented by a processor and a memory.

FIG. 17 is a diagram illustrating an example of processing circuitry in the case that the processing circuitry provided in the object scanning device according to the first embodiment is implemented by dedicated hardware.

Description of Embodiments

Hereinafter, an object scanning device, a control circuit, a storage medium, and an object scanning method according to embodiments of the present disclosure will be described in detail with reference to the drawings.

First Embodiment.

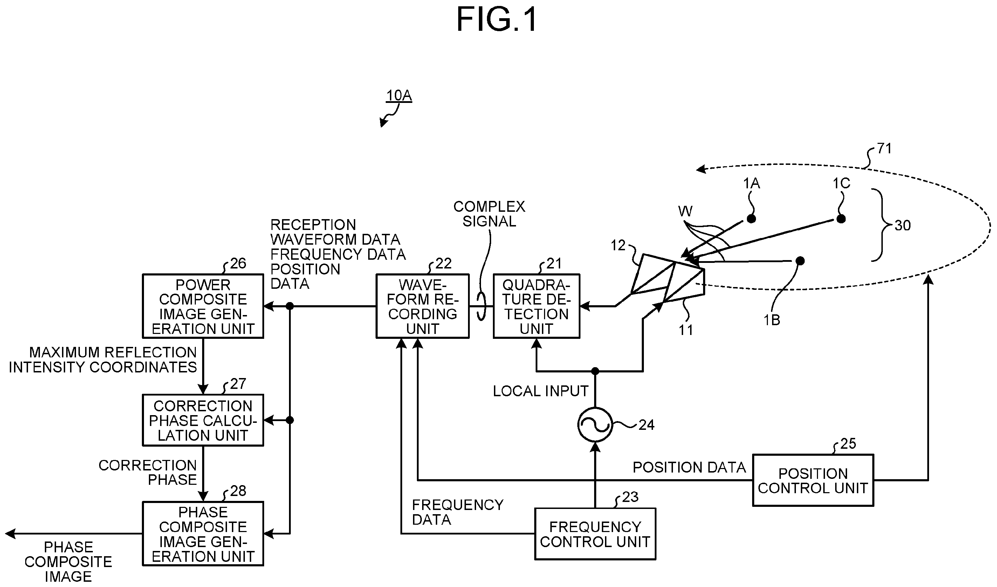

FIG. 1 is a diagram illustrating a configuration of an object scanning device according to the first embodiment. The object scanning device 10A is a device that radiates radio waves of high frequency signals such as millimeter waves or terahertz waves to a radio wave scatterer (object) 30 that is a measurement subject, and scans (or sees through) the radio wave scatterer 30 using reflected waves W from the radio wave scatterer 30. The object scanning device 10A scans the radio wave scatterer 30 through MF-based imaging. The object scanning device 10A executes MF by means of the method of phase composing type using high frequency signals of a plurality of frequencies. Note that the first embodiment assumes that the object scanning device 10A scans the radio wave scatterer 30 under an environment where an accurate distance to the radio wave scatterer 30 cannot be measured.

The object scanning device 10A includes a transmission antenna 11, a reception antenna 12, a quadrature detection unit 21, a high frequency signal generation unit 24, a waveform recording unit 22, a position control unit 25, and a frequency control unit 23. The object scanning device 10A also includes a power composite image generation unit 26, a correction phase calculation unit 27, and a phase composite image generation unit 28. Note that the transmission antenna 11 may be a structure separate from the object scanning device 10A. The reception antenna 12 may also be a structure separate from the object scanning device 10A.

The frequency control unit 23 controls the frequency of a high frequency signal to be output from the high frequency signal generation unit 24 by outputting a frequency command specifying the frequency of a high frequency signal to the high frequency signal generation unit 24. The frequency control unit 23 updates, with a predetermined pattern, the frequency of a high frequency signal specified to the high frequency signal generation unit 24. The frequency control unit 23 outputs the frequency of a high frequency signal indicated by the frequency command to the waveform recording unit 22 as frequency data.

The high frequency signal generation unit 24 generates a high frequency signal for use in measurement in accordance with the frequency command from the frequency control unit 23, and outputs the high frequency signal to the transmission antenna 11 and the quadrature detection unit 21.

The output of the high frequency signal generation unit 24 is coupled to the local input of the quadrature detection unit 21 and the local input of the transmission antenna 11. The high frequency signal generation unit 24 supplies high frequency signals of various frequencies to the transmission antenna 11 and the quadrature detection unit 21. An example of the high frequency signal generation unit 24 is a high frequency signal generator.

The transmission antenna 11 is a component that emits the high frequency signal output from the high frequency signal generation unit 24 into space as radio waves. The transmission antenna 11 radiates radio waves of the high frequency signal to the radio wave scatterer 30 to be measured. Examples of the transmission antenna 11 include a horn antenna, a pattern antenna formed on a substrate, an array antenna including a plurality of antennas, and the like.

The reception antenna 12 is a component that receives the reflected waves W from the radio wave scatterer 30. The reception antenna 12 receives the reflected waves W reflected by a plurality of radio wave scattering points such as scattering points 1A to 1C, and outputs the reflected waves W to the quadrature detection unit 21. Examples of the reception antenna 12 include a horn antenna, a pattern antenna formed on a substrate, an array antenna including a plurality of antennas, and the like. Note that the reception antenna 12 need not necessarily have the same structure as the transmission antenna 11.

The position control unit 25 controls at least one of the position of the transmission antenna 11 and the position of the reception antenna 12. The position control unit 25 may control the positions of both the transmission antenna 11 and the reception antenna 12, may control the position of only the transmission antenna 11, or may control the position of only the reception antenna 12.

If the position of the reception antenna 12 is fixed, the position control unit 25 controls the position of the transmission antenna 11. If the position of the transmission antenna 11 is fixed, the position control unit 25 controls the position of the reception antenna 12.

The position of the transmission antenna 11 corresponds to the direction in which the transmission antenna 11 emits radio waves. Hereinafter, a case where the position control unit 25 controls the positions of both the transmission antenna 11 and the reception antenna 12 will be described. In addition, the relative position between the transmission antenna 11 and the reception antenna 12 does not change, and the position control unit 25 moves the transmission antenna 11 and the reception antenna 12 together.

The position control unit 25 is connected to a conveyance mechanism (not illustrated) equipped with the transmission antenna 11 and the reception antenna 12, and controls the position of the transmission antenna 11 and the reception antenna 12 by controlling the position of the conveyance mechanism.

The position control unit 25 moves the transmission antenna 11 and the reception antenna 12 according to a predetermined antenna moving path 71, and outputs position data indicating the position of the transmission antenna 11 and the reception antenna 12 to the waveform recording unit 22. If the position of the transmission antenna 11 is fixed, the position data of the transmission antenna 11 has a fixed value. If the position of the reception antenna 12 is fixed, the position data of the reception antenna 12 has a fixed value. The position data output from the position control unit 25 to the waveform recording unit 22 corresponds to a movement command output from the position control unit 25 to the conveyance mechanism.

For example, as illustrated in FIG. 1, the antenna moving path 71 is a path along a circle of movement surrounding the radio wave scatterer 30 to be measured. Note that the antenna moving path 71 is not limited to a path along a circle.

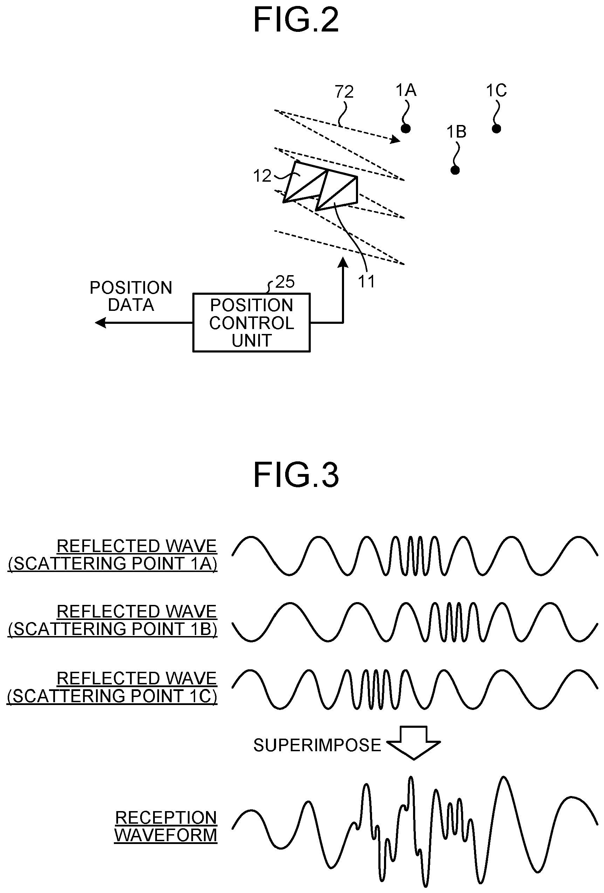

FIG. 2 is a diagram for explaining another example of an antenna moving path applied by the object scanning device according to the first embodiment. The antenna moving path 72, which is another example of the antenna moving path 71, is a path along which the transmission antenna 11 and the reception antenna 12 move up, down, left, and right in a specific plane. Assuming that the plane set for the antenna moving path 72 is an XY plane, the position control unit 25 moves the transmission antenna 11 and the reception antenna 12 in various directions in the XY plane by combining various movements in the X direction and in the Y direction.

In the case of applying the antenna moving path 72, the object scanning device 10A uses an XY stage that moves the transmission antenna 11 and the reception antenna 12 in the XY plane. The XY stage is a stage movable in the X-axis direction and the Y-axis direction, where the X axis and the Y axis are two axes that are in a specific plane and are orthogonal to each other.

The quadrature detection unit 21 down-converts the reception signal obtained from the reception antenna 12 using the high frequency signal supplied from the high frequency signal generation unit 24 to obtain a baseband signal that is a complex signal. The baseband signal includes amplitude/phase difference information, i.e. information of the amplitude difference and the phase difference between the high frequency signal output from the transmission antenna 11 and the reflected waves received by the reception antenna 12. The quadrature detection unit 21 outputs the baseband signal including the amplitude/phase difference information to the waveform recording unit 22. An example of the quadrature detection unit 21 is a quadrature detection circuit.

The waveform recording unit 22 converts the baseband signal output from the quadrature detection unit 21 from analog to digital to obtain a reception waveform data, and records the reception waveform data. The waveform recording unit 22 records the reception waveform data including the amplitude/phase difference information, the frequency data, and the position data in association with each other.

The power composite image generation unit 26 uses the reception waveform data, frequency data, and position data recorded in the waveform recording unit 22 to generate a power composite image of the radio wave scatterer 30 to be measured by means of an imaging method using a MF (i.e. an MF-based imaging method) of power composing type. The power composite image is an image generated with an MF-based imaging method of power composing type.

The method of power composing type is a method of calculating a correlation value between an estimated waveform and a reception waveform, that is, a correlation vector having phase information, for each frequency with respect to all observation points, and integrating only the magnitude of the obtained correlation vectors. The method of power composing type is advantageous in that regardless of whether the phases of correlation vectors vary, imaging can be performed robustly because the phases are not considered.

Among the coordinates on the power composite image generated by the power composite image generation unit 26, a coordinate indicating a position of an observation point having the maximum reflection intensity is called a maximum reflection intensity coordinate. The power composite image generation unit 26 outputs data of the power composite image including the maximum reflection intensity coordinate to the correction phase calculation unit 27.

The correction phase calculation unit 27 calculates a correction phase $Arg(c_n(\lambda))$ at each frequency based on the power composite image output from the power composite image generation unit 26 and the reception waveform data, frequency data, and position data recorded in the waveform recording unit 22. In this case, the correction phase calculation unit 27 searches the power composite image output from the power composite image generation unit 26 for the maximum reflection intensity coordinate, and calculates the correction phase $Arg(c_n(\lambda))$ at the maximum reflection intensity coordinate for each frequency. The correction phase calculation unit 27 outputs the correction phase $Arg(c_n(\lambda))$ at each frequency to the phase composite image generation unit 28.

The phase composite image generation unit 28 generates a phase composite image based on the correction phase $Arg(c_n(\lambda))$ at each frequency output from the correction phase calculation unit 27 and the reception waveform data, frequency data, and position data recorded in the waveform recording unit 22. In this case, the phase composite image generation unit 28 generates the phase composite image with an imaging method of phase composing type. The phase composite image is an image generated with an MF-based imaging method of phase composing type. The phase composite image generation unit 28 outputs the phase composite image as an imaging result to an external device such as a display device.

Here, the relationship between time-series data of reflected waves obtained by the measurement system of the object scanning device 10A and a reception signal will be described. FIG. 3 is a diagram for explaining a process of generating a reception signal by the object scanning device according to the first embodiment.

As illustrated in FIG. 3, reflected waves from the scattering points 1A to 1C at different positions have different waveforms. The reception antenna 12 generates a reception signal by superimposing time-series data of the reflected waves. Here, the reception antenna 12 generates the reception waveform, i.e. the waveform of the reception signal, by superimposing the reflected wave from the scattering point 1A, the reflected wave from the scattering point 1B, and the reflected wave from the scattering point 1C. Thus, the reception signal is a signal in which the reflected waves from all the scattering points are superimposed.

In this case, if the positional relationship between the position of the measurement area in which the scattering points are disposed and the transmission/reception antenna position, which is the position of the transmission antenna 11 and the reception antenna 12, is known, it is possible to estimate the waveform of the reflected wave from the scattering point at given coordinates on the measurement area. The position of the measurement area is registered in the object scanning device 10A in advance. The transmission/reception antenna position corresponds to the position data that the position control unit 25 causes the waveform recording unit 22 to record.

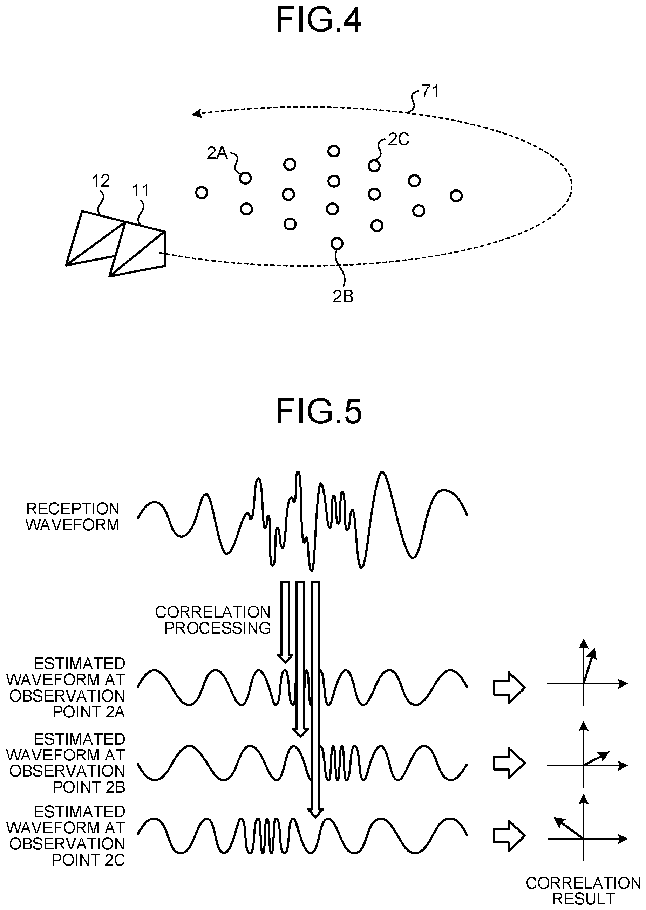

When performing MF-based imaging, the object scanning device 10A comprehensively provides observation points in the measurement area, and generates an estimated waveform of a reflected wave for each observation point. FIG. 4 is a diagram for explaining observation points set by the object scanning device according to the first embodiment.

The object scanning device 10A comprehensively sets observation points at various positions in the measurement area. FIG. 4 illustrates a case where the object scanning device 10A sets observation points 2A to 2C.

The object scanning device 10A maps the reflection intensity from each observation point by correlating the estimated waveforms of reflected waves with the reception waveform. FIG. 5 is a diagram for explaining the correlation between estimated waveforms of reflected waves and a reception waveform calculated by the object scanning device according to the first embodiment.

The power composite image generation unit 26 of the object scanning device 10A correlates the estimated waveforms of reflected waves with the reception waveform. Here, the power composite image generation unit 26 correlates the estimated waveform of the reflected wave at the observation point 2A with the reception waveform. In addition, the power composite image generation unit 26 correlates the estimated waveform of the reflected wave at the observation point 2B with the reception waveform, and correlates the estimated waveform of the reflected wave at the observation point 2C with the reception waveform.

The power composite image generation unit 26 maps the reflection intensity from each observation point based on the correlation result indicating the correlation value between the estimated waveform of the reflected wave and the reception waveform. The correlation value in this case is obtained as a correlation vector having phase information. When the distance between the observation point and the scattering point is short, a high correlation value is obtained, and when the scattering point does not exist near the observation point, a low correlation value is obtained.

In the MF-based imaging executed by the object scanning device 10A, by repeating the same measurement using a plurality of frequencies, it is possible to reduce side lobes due to the arrangement of the transmission antenna 11 and the reception antenna 12 and scattering objects around the radio wave scatterer 30.

When composing images measured at a plurality of frequencies, the object scanning device 10A uses both the method of power composing type that involves integration of the magnitude of correlation vectors for each pixel and the method of phase composing type that involves complex addition in which phase information for each pixel is considered.

The method of phase composing type may result in cancellation of correlation vectors at the time of complex addition unless the phases of the correlation vectors of the same observation point measured at different frequencies are accurately matched; therefore, the object scanning device 10A executes signal processing by considering the positional relationship between the position of observation points and the transmission/reception antenna position and the influence of the frequency characteristics of the measurement system.

Here, a process of generating a phase composite image executed by the object scanning device 10A will be briefly described. When composing the images measured at a plurality of frequencies by means of the method of phase composing type, the object scanning device 10A removes the phase offset included in the observation system so as to match the phases of the correlation vectors of the same observation point measured at different frequencies. That is, in order to implement phase composing, the object scanning device 10A corrects the phase of radio waves by subtracting the phase offset of correlation vectors that occurs when a certain pixel is measured at different frequencies from the phase of the measurement result.

In the measurement system illustrated in FIG. 4, given that the round-trip propagation distance at time t between the transmission/reception antenna position and a certain observation point n is $d_n(t)$, the phase $\theta(t, \lambda)$ of the reception signal is expressed by Formula (1) below. The wavelength of radio waves used for the measurement is the wavelength $\lambda$, and the fixed phase offset amount included in the measurement system at the wavelength $\lambda$ is $\varphi(\lambda)$.
Formula 1:

$$\theta(t,\lambda) = \frac{d_n(t)}{\lambda} + \phi(\lambda) \qquad \cdots (1)$$

In addition, the estimated value $\theta^\Lambda(t, \lambda)$ of the reflected wave phase from the observation point n at time t in which the fixed phase offset included in the measurement system is not considered is expressed by Formula (2) below. The symbol $\theta^\Lambda$ indicates that a hat symbol is placed directly above "$\theta$". The fixed error between the actual distance between the transmission/reception antenna position and the observation point and the estimated value is E.
Formula 2:

$$\hat{\theta}(t,\lambda) = \frac{d_n(t) + E}{\lambda} \qquad \cdots (2)$$

The reflected wave $y_n(t, \lambda)$ from the observation point n at time t and its estimated value $y_n^\Lambda(t, \lambda)$ are expressed respectively by Formulas (3) and (4) below using Formulas (1) and (2). The symbol $y_n^\Lambda$ indicates that a hat symbol is placed directly above "$y_n$".
Formula 3:

$$y_n(t,\lambda) = \exp\{-j\theta(t,\lambda)\} \qquad \cdots (3)$$

Formula 4:

$$\hat{y}_n(t,\lambda) = \exp\{-j\hat{\theta}(t,\lambda)\} \qquad \cdots (4)$$

Note that for simplification of the conditions, the amplitude variation of reflected waves is assumed to be negligible. In this case, the correlation value $c_n(\lambda)$ at the wavelength $\lambda$ and the observation point n is expressed by Formula (5) below.
Formula 5:

$$c_n(\lambda) = \int_0^T y_n(t,\lambda)\hat{y}_n^*(t,\lambda)dt = \int_0^T \exp\left[-j\left\{\frac{d_n(t)}{\lambda} + \phi(\lambda) - \frac{d_n(t) + E}{\lambda}\right\}\right]dt \qquad \cdots (5)$$
$$= T\exp\left[-j\left\{\phi(\lambda) - \frac{E}{\lambda}\right\}\right]$$

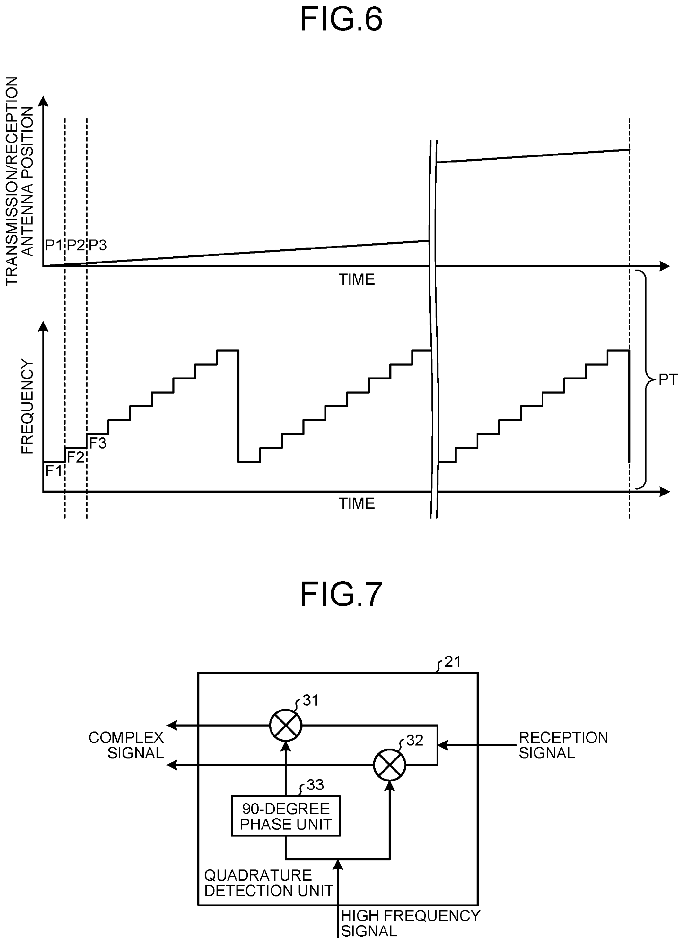

Formula (5) indicates that the phase component of the correlation vector at each observation point depends only on the wavelength $\lambda$ of radio waves used for measurement, and does not depend on the location of the observation point. Therefore, the object scanning device 10A according to the present embodiment takes advantage of the fact that the phase component of the correlation vector at each observation point depends only on the wavelength $\lambda$ of radio waves used for measurement and does not depend on the location of the observation point. The object scanning device 10A calculates, for each frequency, the phase $\text{Arg}(c_n(\lambda))$ of the correlation vector at the coordinates (calibration coordinates) of the maximum reflection intensity, and uses the phase $\text{Arg}(c_n(\lambda))$ as a correction phase for composing the frequencies.
The object scanning device 10A generates a phase composite image by correcting the images at different frequencies using the correction phase and composing the images. As a result, the object scanning device 10A avoids the cancellation of correlation vectors when composing the phases of the images acquired at different frequencies.
Hereinafter, the configuration and operation of each component included in the object scanning device 10A will be described in detail. FIG. 6 is a diagram for explaining an update pattern for the frequencies of high frequency signals used by the object scanning device according to the first embodiment. The horizontal axis of the graphs illustrated in FIG. 6 is time. The vertical axis of the graph illustrated in the upper part of FIG. 6 is the transmission/reception antenna position, and the vertical axis of the graph illustrated in the lower part of FIG. 6 is the frequency specified by the frequency control unit 23 to the high frequency signal generation unit 24.

The position control unit 25 moves the transmission antenna 11 and the reception antenna 12 at a constant speed. It is illustrated in FIG. 6, the update pattern PT for the frequencies of high frequency signals. According to the invention, frequencies in a certain range are repeated stepwise with respect to the transmission/reception antenna position set by the position control unit 25.

The graph illustrated in the upper part of FIG. 6 represents a case in which the position control unit 25 controls the position of the transmission antenna 11 and the reception antenna 12 so as to set the transmission/reception antenna position sequentially to the position P1, the position P2, and the position P3.

The graph illustrated in the lower part of FIG. 6 represents a case in which the frequency control unit 23 controls the frequency so as to increase the frequency stepwise to the frequency F1, the frequency F2, and the frequency F3. The frequency F1 is the frequency in the case that the transmission/reception antenna position is the position P1. The frequency F2 is the frequency in the case that the transmission/reception antenna position is the position P2, and the frequency F3 is the frequency in the case that the transmission/reception antenna position is the position P3.

After making the frequency reach a specific magnitude, the frequency control unit 23 performs control to increase the frequency stepwise again to the frequency F1, the frequency F2, and the frequency F3. The frequency control unit 23 repeats these processes.

Note that the update pattern PT illustrated in FIG. 6 is an example, and the combination of frequencies and transmission/reception antenna positions may be changed, or the order of measurement may be rearranged.

Here, a specific example of the quadrature detection unit 21 will be described. FIG. 7 is a diagram for explaining a configuration of the quadrature detection unit provided in the object scanning device according to the first embodiment. The quadrature detection unit 21 includes mixers 31 and 32 and a 90-degree phase unit 33. An example of the 90-degree phase unit 33 is a 90-degree phase shifter.

To the quadrature detection unit 21, the high frequency signal supplied from the high frequency signal generation unit 24 is locally input, and the reception signal is input from the reception antenna 12. The high frequency signal from the high frequency signal generation unit 24 is input to the 90-degree phase unit 33 and the mixer 32. The reception signal from the reception antenna 12 is input to the mixer 31 and the mixer 32.

The 90-degree phase unit 33 generates, from the high frequency signal, a high frequency signal having a phase difference of 90 degrees at the same frequency, and outputs the high frequency signal to the mixer 31. As a result, the high frequency signal from the high frequency signal generation unit 24 is input as it is to the mixer 32, and the high frequency signal having a phase difference of 90 degrees at the same frequency with respect to the high frequency signal from the high frequency signal generation unit 24 is input to the mixer 31.

The mixer 32 mixes the high frequency signal from the high frequency signal generation unit 24 and the reception signal and outputs the resultant signal. The mixer 31 mixes the high frequency signal having a phase difference of 90 degrees and the reception signal and outputs the resultant signal. As a result, the quadrature detection unit 21 down-converts the reception signal output from the reception antenna 12 to calculate a baseband signal (reception waveform data) that is a complex signal, and outputs the baseband signal to the waveform recording unit 22.

Next, the configuration and operation of the waveform recording unit 22 will be described in detail. The waveform recording unit 22 includes a memory unit that records reception waveform data that is a complex signal output from the quadrature detection unit 21, position data output from the position control unit 25, and frequency data output from the frequency control unit 23.

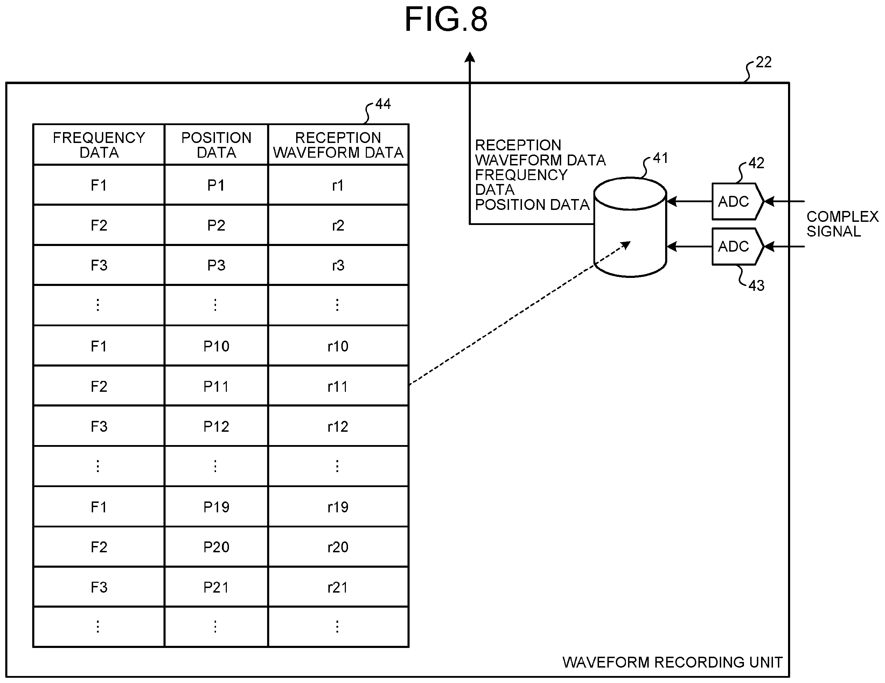

FIG. 8 is a diagram illustrating a configuration of the waveform recording unit provided in the object scanning device according to the first embodiment. The waveform recording unit 22 includes a memory unit 41 that stores correspondence information 44 in which reception waveform data indicated by a complex signal, frequency data, and position data are associated with each other.

The waveform recording unit 22 also includes analog-to-digital converters (ADCs) 42 and 43 that convert the complex signal output from the quadrature detection unit 21 into a digital signal and record the digital signal in the memory unit 41.

The ADC 42 converts the complex signal output from the mixer 31 of the quadrature detection unit 21 into a digital signal and records the digital signal in the memory unit 41. The ADC 43 converts the complex signal output from the mixer 32 of the quadrature detection unit 21 into a digital signal and records the digital signal in the memory unit 41.

The correspondence information 44 illustrated in FIG. 8 is information that is stored in the memory unit 41 when the transmission/reception antenna position and the frequency illustrated in FIG. 6 are set.

The frequency data, position data, and reception waveform data stored in the correspondence information 44 are read by the power composite image generation unit 26, the correction phase calculation unit 27, and the phase composite image generation unit 28. For example, the reception waveform r1 in the reception waveform data corresponds to the frequency F1 in the frequency data and the position P1 in the position data.

Next, the configuration and operation of the power composite image generation unit 26 will be described in detail. The power composite image generation unit 26 reads the reception waveform data, frequency data, and position data recorded in the waveform recording unit 22. The power composite image generation unit 26 generates a power composite image using the reception waveform data, frequency data, and position data recorded in the waveform recording unit 22.

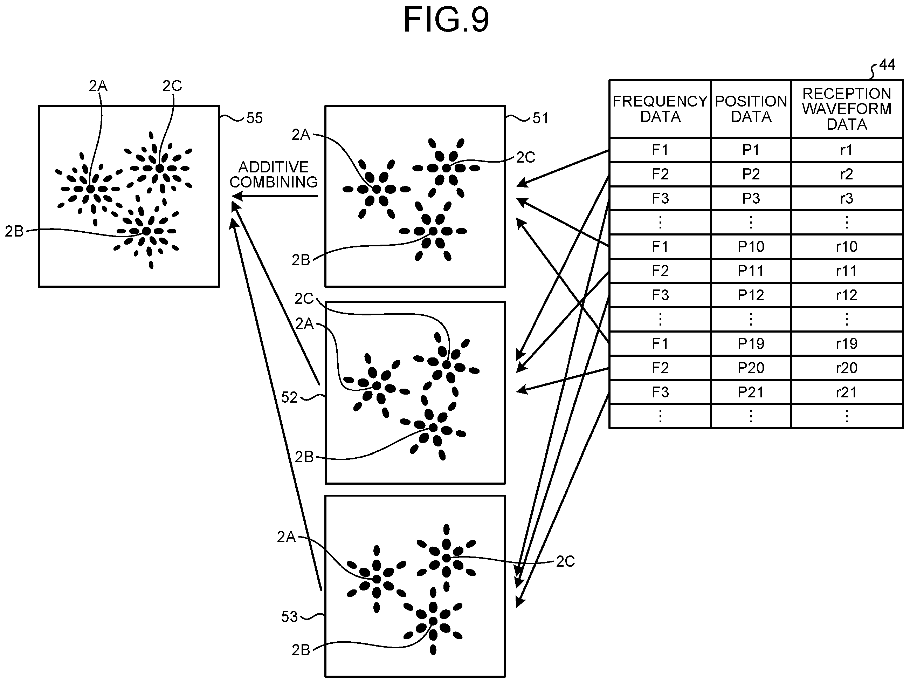

FIG. 9 is a diagram for explaining a process of generating a power composite image by the power composite image generation unit provided in the object scanning device according to the first embodiment. FIG. 9 illustrates the relationship between the correspondence information 44, which is data read from the waveform recording unit 22 by the power composite image generation unit 26, and the power composite image generated by the power composite image generation unit 26 using the read correspondence information 44.

The correspondence information 44 read from the waveform recording unit 22 by the power composite image generation unit 26 is information in which the reception waveform data, the frequency data, and the position data are associated with each other. The power composite image generation unit 26 groups the read correspondence information 44 into data pieces each having the same frequency, and generates an MF-based image for each frequency.

The illustrated case indicates that the power composite image generation unit 26 generates an image 51 from the data of the frequency F1, generates an image 52 from the data of the frequency F2, and generates an image 53 from the data of the frequency F3.

Thereafter, the power composite image generation unit 26 composes the images generated for the different frequencies by means of the method of power composing type to generate a single power composite image. FIG. 9 illustrates a case where the power composite image generation unit 26 composes the images 51 to 53 by means of the method of power composing type to generate a single power composite image 55.

Next, the configuration and operation of the correction phase calculation unit 27 will be described in detail. The correction phase calculation unit 27 calculates the correction phase $\text{Arg}(c_n(\lambda))$ at each frequency based on the power composite image output from the power composite image generation unit 26 and the reception waveform data, frequency data, and position data recorded in the waveform recording unit 22.

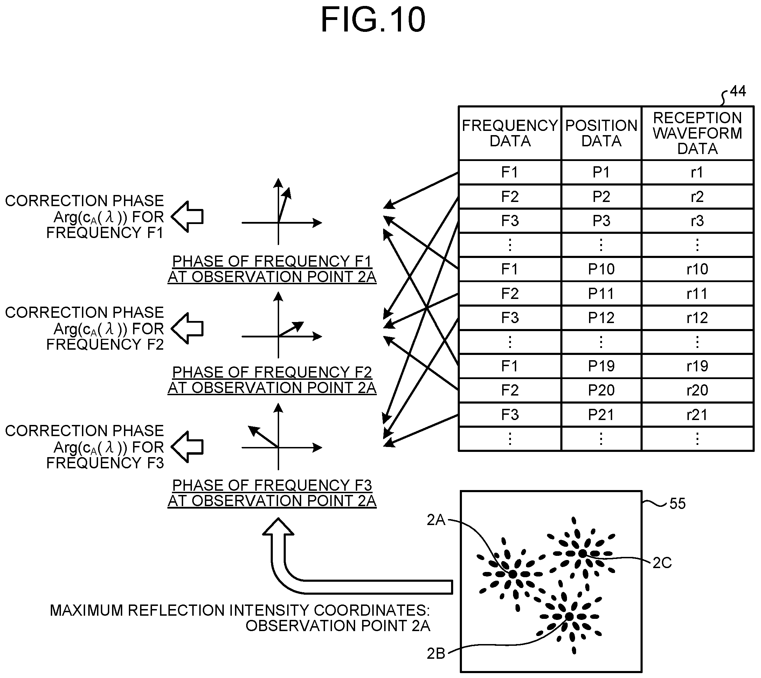

FIG. 10 is a diagram for explaining a process of calculating a correction phase at each frequency by the correction phase calculation unit provided in the object scanning device according to the first embodiment. FIG. 10 depicts a case where the correction phase calculation unit 27 calculates the correction phase $\text{Arg}(c_n(\lambda))$ at each frequency using the power composite image 55 and the correspondence information 44.

The correction phase calculation unit 27 groups the read correspondence information 44 into data pieces each having the same frequency. The correction phase calculation unit 27 also searches for the maximum reflection intensity coordinate of the power composite image 55 output from the power composite image generation unit 26. Here, a case where the maximum reflection intensity coordinate represent the observation point 2A will be described.

The correction phase calculation unit 27 calculates, for each frequency, the correction phase $\text{Arg}(c_n(\lambda))$ at the observation point 2A represented by the maximum reflection intensity coordinates. Specifically, the correction phase calculation unit 27 calculates the phases of the frequencies F1 to F3 at the observation point 2A. The phases of the frequencies F1 to F3 at the observation point 2A are used as the correction phases $\text{Arg}(c_n(\lambda))$ for the images 51 to 53 when the power composite image 55 is generated.

That is, the phase $\text{Arg}(c_n(\lambda))$ of the frequency F1 at the observation point 2A is used as the correction phase $\text{Arg}(c_n(\lambda))$ for the image 51 when the power composite image 55 is generated. Similarly, the phase $\text{Arg}(c_n(\lambda))$ of the frequency F2 at the observation point 2A is used as the correction phase $\text{Arg}(c_n(\lambda))$ for the image 52 when the power composite image 55 is generated. The phase $\text{Arg}(c_n(\lambda))$ of the frequency F3 at the observation point 2A is used as the correction phase $\text{Arg}(c_n(\lambda))$ for the image 53 when the power composite image 55 is generated. In FIG. 10, the correction phases for the frequencies F1 to F3 are indicated by the correction phases $\text{Arg}(c_A(\lambda))$.

Next, the configuration and operation of the phase composite image generation unit 28 will be described in detail. The phase composite image generation unit 28 generates a phase composite image based on the correction phase $\text{Arg}(c_n(\lambda))$ at each frequency output from the correction phase calculation unit 27 and the reception waveform data, frequency data, and position data recorded in the waveform recording unit 22.

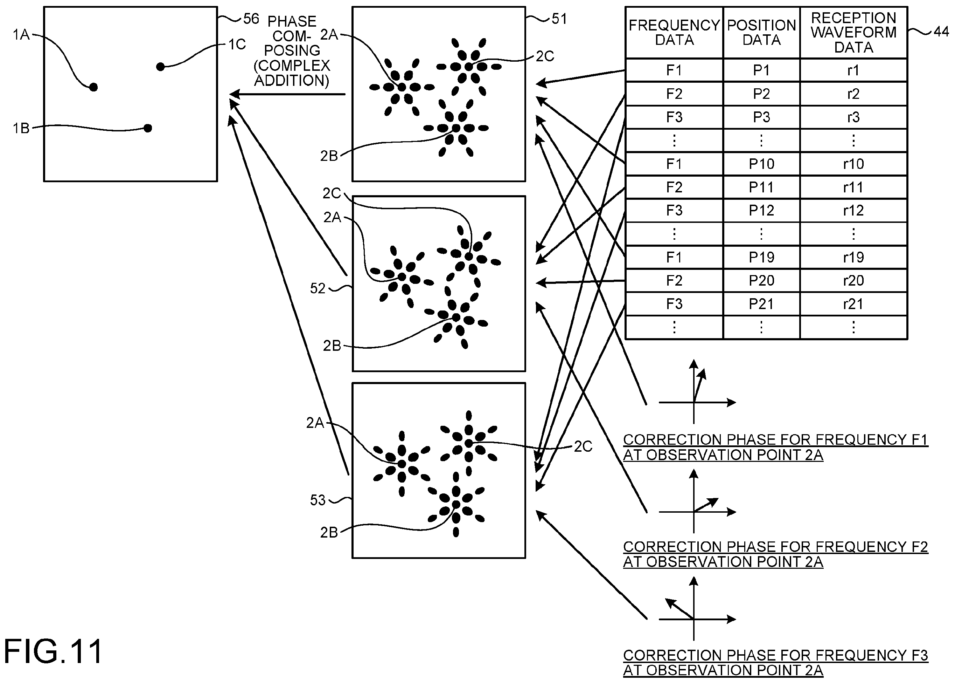

FIG. 11 is a diagram for explaining a process of generating a phase composite image by the phase composite image generation unit provided in the object scanning device according to the first embodiment. FIG. 11 depicts a case where the phase composite image generation unit 28 generates a phase composite image 56 using the correction phase $\text{Arg}(c_n(\lambda))$ and the correspondence information 44.

The phase composite image generation unit 28 groups the correspondence information 44 read from the waveform recording unit 22 into data pieces each having the same frequency, and generates the images 51 to 53 using MF for the different frequencies. Note that the phase composite image generation unit 28 may acquire the images 51 to 53 at the different frequencies using MF from the power composite image generation unit 26.

The phase composite image generation unit 28 generates the phase composite image 56 from the images 51 to 53 created for the different frequencies by reversely rotating the correlation vector of each pixel by the correction phase $\text{Arg}(c_n(\lambda))$ at each frequency calculated by the correction phase calculation unit 27, and performing complex addition. The phase composite image 56 corresponds to an image in the measurement area.

As described above, the object scanning device 10A calculates the phase $\text{Arg}(c_n(\lambda))$ of the correlation vector for each frequency at the maximum reflection intensity coordinate. The object scanning device 10A uses the phase $Arg(c_n(\lambda))$ as the correction phase $Arg(c_n(\lambda))$, thereby avoiding the cancellation of correlation vectors when composing the images 51 to 53 acquired at different frequencies by means of the method of phase composing type.

In addition, as the calibration coordinates for obtaining the correction phase $Arg(c_n(\lambda))$, the object scanning device 10A selects coordinate having the maximum reflection intensity coordinate, from the images 51 to 53 generated through power composing. As a result, the object scanning device 10A can generate the phase composite image 56 in the measurement area using the correction phase $Arg(c_n(\lambda))$ without disposing a calibration signal generation device in the measurement area and without installing a scatterer for calibration at known coordinates.

In addition, when the object scanning device 10A calibrates the phase of the images 51 to 53 created for different frequencies, it is not necessary for a calibration signal generation device to periodically generate calibration signals, and it is not necessary to stop the measurement of reflected waves during phase calibration. In addition, the object scanning device 10A does not require the installation of a radio frequency identification (RFID) tag, which is an example of a scatterer for calibration, at an accurate position in the measurement environment, and thus there is no restriction on the measurement environment.

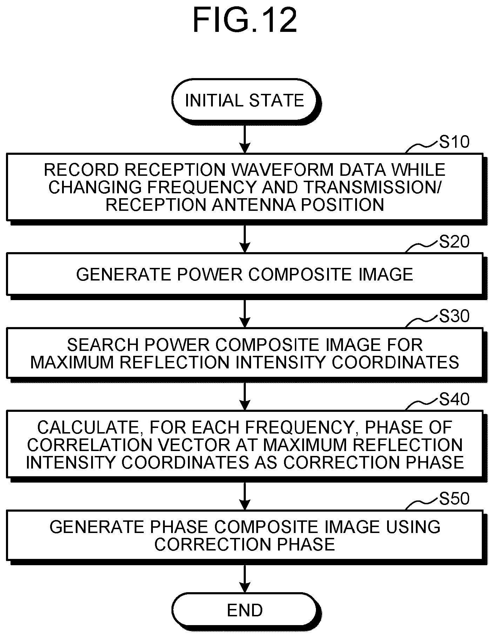

Next, a procedure for generating a phase composite image by the object scanning device 10A will be described. FIG. 12 is a flowchart illustrating a procedure for generating a phase composite image by the object scanning device according to the first embodiment. The object scanning device 10A receives reflected waves while changing the frequency and the transmission/reception antenna position, and records reception waveform data that is information of reflected waves (step S10).

Specifically, the position control unit 25 controls the transmission/reception antenna position, and the frequency control unit 23 controls the frequency. Upon receiving reflected waves from the radio wave scatterer 30, the reception antenna 12 outputs a reception signal to the quadrature detection unit 21. The quadrature detection unit 21 generates a baseband signal that is a complex signal using the reception signal from the reception antenna 12 and the high frequency signal from the high frequency signal generation unit 24.

The waveform recording unit 22 generates reception waveform data from the baseband signal and records the reception waveform data. In addition, the waveform recording unit 22 records the position data output from the position control unit 25 and the frequency data output from the frequency control unit 23 in association with the reception waveform data.

The power composite image generation unit 26 generates a power composite image using the reception waveform data, frequency data, and position data recorded in the waveform recording unit 22 (step S20).

The correction phase calculation unit 27 searches the power composite image for the maximum reflection intensity coordinates (step S30). The correction phase calculation unit 27 calculates, for each frequency, the phase of the correlation vector at the maximum reflection intensity coordinates as the correction phase (step S40). The phase composite image generation unit 28 generates a phase composite image using the correction phase (step S50).

As described above, in the first embodiment, the object scanning device 10A generates a phase composite image into which a plurality of images obtained through imaging based on the reflected waves from the radio wave scatterer 30 are composed by performing complex addition for each pixel of the plurality of images. As a result, the object scanning device 10A can obtain the correction phase amount for each frequency, which is required for composing the images measured using a plurality of frequencies by means of the method of phase composing type, without installing a calibration signal generation device in the measurement area or installing a scatterer for calibration at known coordinates. Therefore, even under an environment where an accurate distance to the radio wave scatterer 30 cannot be measured, the object scanning device 10A can accurately scan the radio wave scatterer 30 with a simple configuration using radio waves of a plurality of frequencies.

Second Embodiment.

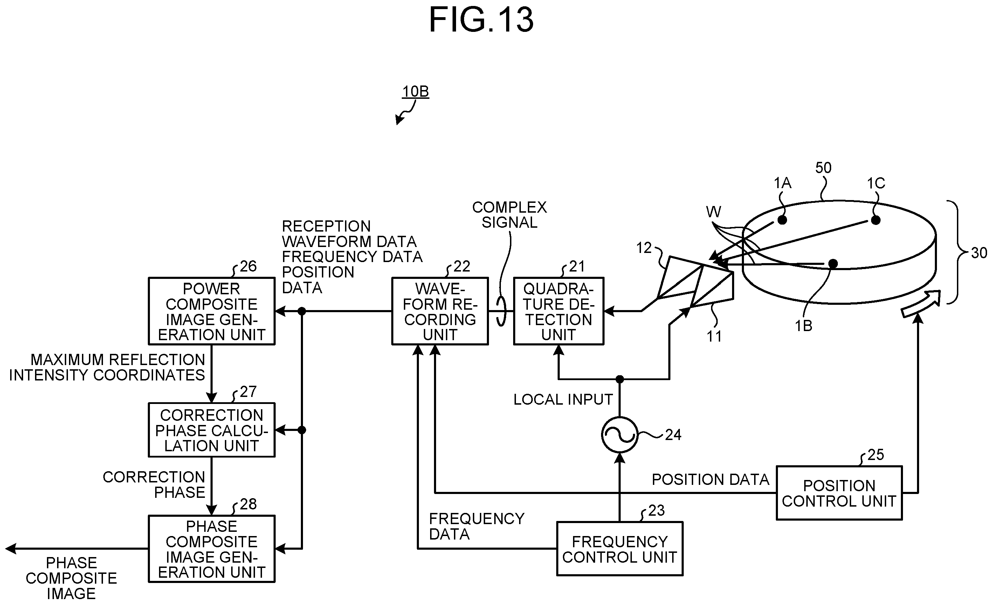

Next, the second embodiment will be described with reference to FIG. 13. In the second embodiment, the transmission antenna 11 and the reception antenna 12 are fixed, and the radio wave scatterer 30 is moved.

FIG. 13 is a diagram illustrating a configuration of an object scanning device according to the second embodiment. Components illustrated in FIG. 13 that achieve the same functions as those of the object scanning device 10A of the first embodiment illustrated in FIG. 1 are denoted by the same reference signs, and duplicate descriptions are omitted.

The object scanning device 10B is different from the object scanning device 10A in the measurement system. The object scanning device 10B fixes the transmission antenna 11 and the reception antenna 12, and instead moves the radio wave scatterer 30 that is a measurement subject. The object scanning device 10B includes a rotation table 50 that rotates with the measurement subject placed thereon.

The position control unit 25 of the object scanning device 10B controls the rotational position of the rotation table 50. As the rotation table 50 rotates, the radio wave scatterer 30 reflects radio waves at various positions. As a result, the reception antenna 12 of the object scanning device 10B receives the reflected waves W in the same manner as the object scanning device 10A. Therefore, the object scanning device 10B can generate a phase composite image through the same processing as the object scanning device 10A.

Although FIG. 13 illustrates the configuration in which the radio wave scatterer 30 is rotated by the rotation table 50, the object scanning device 10B may move the radio wave scatterer 30 using a mechanism such as the XY stage described in FIG. 2 of the first embodiment instead of the rotation table 50.

As described above, in the second embodiment, the object scanning device 10B rotates the radio wave scatterer 30 by means of the rotation table 50, and generates a phase composite image through the same processing as the object scanning device 10A. As a result, even under an environment where an accurate distance to the radio wave scatterer 30 cannot be measured, the object scanning device 10B can accurately scan the radio wave scatterer 30 with a simple configuration using radio waves of a plurality of frequencies, in the same manner as the object scanning device 10A.

In addition, owing to the fixed transmission/reception antenna position, the object scanning device 10B does not need to consider the movement of the wiring connecting the transmission antenna 11 and the high frequency signal generation unit 24 and the movement of the wiring connecting the reception antenna 12 and the quadrature detection unit 21.

Third Embodiment.

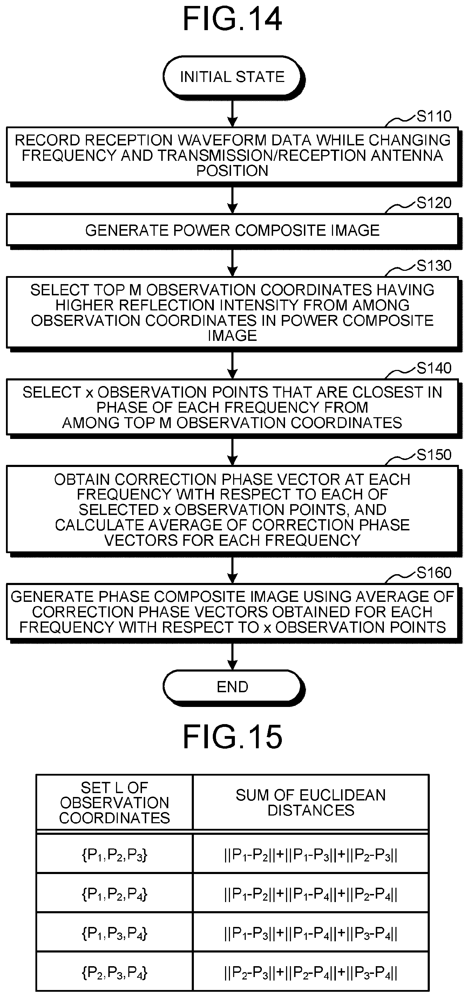

Next, the third embodiment will be described with reference to FIG. 14. The third embodiment is different from the first and second embodiments in the procedure for calculating the correction phase in the correction phase calculation unit 27.

The object scanning device according to the third embodiment may be either the object scanning device 10A or the object scanning device 10B. In the following description, a case where the object scanning device according to the third embodiment is the object scanning device 10A will be described.

FIG. 14 is a flowchart illustrating a procedure for generating a phase composite image by the object scanning device The object scanning device 10A receives reflected waves while changing the frequency and the transmission/reception antenna position, and records reception waveform data that is information of reflected waves (step S110) through the same processing as in step S10 described in the first embodiment.

The power composite image generation unit 26 generates a power composite image (step S120) through the same processing as in step S20 described in the first embodiment.

The correction phase calculation unit 27 selects top M (M is a natural number of two or more) observation coordinates having higher reflection intensity from among the coordinates of the observation points in the power composite image output from the power composite image generation unit 26, that is, the observation coordinates (step S130). For the selected M observation coordinates, the correction phase calculation unit 27 calculates a correction phase $\text{Arg}(c_n(\lambda_k))$ (n=1, ..., and M, k=1, ..., and K) at each frequency from the reception waveform data, frequency data, and position data recorded in the waveform recording unit 22. Here, K represents the number of frequencies used for observation.

The correction phase calculation unit 27 defines a correction phase vector $P_n$ (n=1, ..., and M) having the correction phase $\text{Arg}(c_n(\lambda_k))$ at each frequency as an element, as expressed by Formula (6) below.

Formula 6:

$$P_n = \begin{pmatrix} \text{Arg}(c_n(\lambda_1)) & \text{Arg}(c_n(\lambda_2)) & \cdots & \text{Arg}(c_n(\lambda_K)) \end{pmatrix} \qquad \cdots (6)$$

The correction phase calculation unit 27 extracts x (x is a natural number of M or less) observation coordinates from among the selected M observation coordinates. The correction phase calculation unit 27 obtains the Euclidean distance between correction phase vectors for $_lC_2$ combinations of two observation coordinates selected from a set L of the extracted x observation coordinates. The correction phase calculation unit 27 calculates the sum of Euclidean distances.

The correction phase calculation unit 27 calculates the sum of Euclidean distances for all the $_MC_x$ combinations, and selects a combination having the smallest sum of Euclidean distances between correction phase vectors. That is, the correction phase calculation unit 27 selects x observation points that are closest in the phase of each frequency from among the top M observation coordinates (step S140).

The correction phase calculation unit 27 calculates the average of the correction phase vectors of the selected observation points. That is, the correction phase calculation unit 27 obtains the correction phase vector at each frequency with respect to each of the selected x observation points, and calculates the average of the correction phase vectors for each frequency (step S150).

In this manner, the correction phase calculation unit 27 extracts top M observation coordinates, and extracts x observation coordinates that form a combination having the smallest phase difference of each frequency from among the combinations of x observation coordinates included in the top M observation coordinates. Furthermore, the correction phase calculation unit 27 calculates the average of the phases of each frequency as a correction phase with respect to the extracted x observation coordinates.

The correction phase calculation unit 27 sets the calculated average of the correction phase vectors as the correction phase at each frequency to be output to the phase composite image generation unit 28. The correction phase calculation unit 27 generates a phase composite image using the correction phase (average of correction phase vectors) obtained for each frequency with respect to the x observation points (step S160). Note that x may be the same value as M.

FIG. 15 is a diagram for explaining combinations that are sets of observation coordinates and the sum of Euclidean distances in each combination calculated by the object scanning device according to the third embodiment. FIG. 15 depicts, given M=4 and x=3, combinations that are sets L of observation coordinates and the sum of Euclidean distances in each combination expressed by an equation.

As described above, according to the third embodiment, since the object scanning device 10A can use information of a plurality of observation points to calculate the correction phase, it is possible to stably obtain the correction phase as compared with the first and second embodiments.

Here, the hardware configuration of the object scanning devices 10A and 10B will be described. Because the object scanning devices 10A and 10B have the same hardware configuration, the hardware configuration of the object scanning device 10A according to the first embodiment will be described below.

In the object scanning device 10A according to the first embodiment, the quadrature detection unit 21, the waveform recording unit 22, the frequency control unit 23, the high frequency signal generation unit 24, the position control unit 25, the power composite image generation unit 26, the correction phase calculation unit 27, and the phase composite image generation unit 28 are implemented by processing circuitry. The processing circuitry may be a memory and a processor that executes a program stored in the memory, or may be dedicated hardware. The processing circuitry is also called a control circuit.

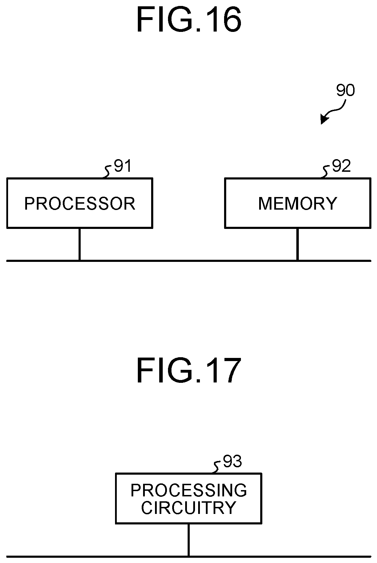

FIG. 16 is a diagram illustrating an exemplary configuration of processing circuitry in the case that the processing circuitry provided in the object scanning device according to the first embodiment is implemented by a processor and a memory. The processing circuitry 90 illustrated in FIG. 16 is a control circuit and includes a processor 91 and a memory 92. In a case where the processing circuitry 90 is configured with the processor 91 and the memory 92, each function of the processing circuitry 90 is implemented by software, firmware, or a combination of software and firmware. Software or firmware is described as a program and stored in the memory 92. In the processing circuitry 90, the processor 91 reads and executes the program stored in the memory 92, thereby implementing each function. That is, the processing circuitry 90 includes the memory 92 for storing a program that results in the execution of processing of the object scanning device 10A. It can also be said that this program is a program for causing the object scanning device 10A to execute each function implemented by the processing circuitry 90. This program may be provided by a storage medium in which the program is stored, or may be provided by other means such as a communication medium.

It can also be said that the above program is a program for causing the object scanning device 10A to execute the processing of steps S10 to S50 in FIG. 12. That is, it can be said that the above program is a program for causing the object scanning device 10A to execute a step of recording reception waveform data, a step of generating a power composite image, a step of searching for maximum reflection intensity coordinates, a step of calculating the phase of the correlation vector at the maximum reflection intensity coordinates as a correction phase, and a step of generating a phase composite image using the correction phase.

The processor 91 is exemplified by a central processing unit (CPU), a processing device, an arithmetic device, a microprocessor, a microcomputer, or a digital signal processor (DSP). Examples of the memory 92 include a non-volatile or volatile semiconductor memory, a magnetic disk, a flexible disk, an optical disc, a compact disc, a mini disc, a digital versatile disc (DVD), and the like. Examples of non-volatile or volatile semiconductor memories include a random access memory (RAM), a read only memory (ROM), a flash memory, an erasable programmable ROM (EPROM), an electrically EPROM (EEPROM, registered trademark), and the like.

FIG. 17 is a diagram illustrating an example of processing circuitry in the case that the processing circuitry provided in the object scanning device according to the first embodiment is implemented by dedicated hardware. For example, the processing circuitry 93 illustrated in FIG. 17 is a single circuit, a composite circuit, a programmed processor, a parallel programmed processor, an application specific integrated circuit (ASIC), a field-programmable gate array (FPGA), or a combination thereof. The processing circuitry 93 may be partially implemented by dedicated hardware, and partially implemented by software or firmware. In this manner, the processing circuitry 93 can implement the above-described functions using dedicated hardware, software, firmware, or a combination thereof.

The configurations described in the above-mentioned embodiments indicate examples. The embodiments can be combined with each other, or can be changed without departing from the scope of protection defined by the independent claims.

# EP 4 266 030 B1

Reference Signs List

1A to 1C scattering point; 2A to 2C observation point; 10A, 10B object scanning device; 11 transmission antenna; 12 reception antenna; 21 quadrature detection unit; 22 waveform recording unit; 23 frequency control unit; 24 high frequency signal generation unit; 25 position control unit; 26 power composite image generation unit; 27 correction phase calculation unit; 28 phase composite image generation unit; 30 radio wave scatterer; 31, 32 mixer; 33 90-degree phase unit; 41 memory unit; 42, 43 ADC; 44 correspondence information; 50 rotation table; 51 to 53 image; 55 power composite image; 56 phase composite image; 71, 72 antenna moving path; 90, 93 processing circuitry; 91 processor; 92 memory; W reflected wave.

**Claims**

1.  An object scanning device (10A) configured to:
    generate a phase composite image of an object (30) that is a measurement subject disposed in a measurement area based on reception, while changing a frequency and a transmission/reception antenna position, of reflected waves (W) of radio waves including a plurality of frequencies radiated to the object (30), the object scanning device (10A) comprising:

    a transmission antenna (11), a reception antenna (12), a quadrature detection unit (21), a high frequency signal generation unit (24), a waveform recording unit (22), a position control unit (25), a frequency control unit (23), a power composite image generation unit (26), a correction phase calculation unit (27), and a phase composite image generation unit (28) configured to: generate a phase composite image using a correction phase,
    wherein the waveform recording unit (22) is configured to: generate reception waveform data from a baseband signal that is a complex signal generated, by the quadrature detection unit (21), using a reception signal from the reception antenna (12) and a high frequency signal from the high frequency signal generation unit (24), and record the reception waveform data, and in addition position data output from the position control unit (25) and frequency data output from the frequency control unit (23) in association with the reception waveform data,
    wherein the power composite image generation unit (26) is configured to generate a power composite image into which images of the measurement subject at the frequencies are composed by using an imaging method with a matched filter of power composing type that involves integrating, for each pixel, correlation vectors indicating a correlation between estimated waveforms of the reflected waves (W) and the reception waveform data based on the reception waveform data, the position data, and the frequency data, the reception waveform data being data of waveforms of the reflected waves (W) emitted from a transmission antenna (11), reflected by the object (30), and received by the reception antenna (12), the position data indicating a position of the transmission antenna (11) and the reception antenna (12) with respect to the object (30), the frequency data being data of the frequencies of radio waves emitted from the transmission antenna (11); and
    the correction phase calculation unit (27) is configured to execute, based on the power composite image, the reception waveform data, the position data, and the frequency data, a process of searching the power composite image for an observation coordinate indicating a maximum reflection intensity, and a process of calculating, for each frequency, a phase of the correlation vectors at the observation coordinate indicating the maximum reflection intensity as the correction phase to be used for phase correction,
    wherein the phase composite image generation unit (28) is configured to generate the phase composite image into which images of the measurement subject at the frequencies are composed by using an imaging method with a matched filter of phase composing type that involves performing complex addition of the correlation vectors for each pixel based on the correction phase, the reception waveform data, the position data, and the frequency data,
    wherein the position control unit (25) is configured to:

    either move the transmission antenna (11) and the reception antenna (12) according to a predetermined antenna moving path (71) along a circle of movement surrounding the object (30); or
    control a rotational position of a rotation table (50) included in the object scanning device and rotating with the object (30) placed thereon;
    wherein the changing a frequency and a transmission/reception antenna position comprises that frequencies are repeated in a certain range stepwise with respect to the transmission/reception antenna position set by the position control unit (25).

2.  The object scanning device (10A) according to claim 1, wherein
    when generating the phase composite image, the phase composite image generation unit (28) subtracts the correction phase for each of the frequencies from a phase offset of the correlation vectors.

3. The object scanning device according to claim 1 or 2, wherein
the correction phase calculation unit (27) searches for maximum reflection intensity coordinate indicating a maximum reflection intensity from among the observation coordinates included in the power composite image, and calculates a phase of each of the frequencies at the maximum reflection intensity coordinate as the correction phase.

4. The object scanning device according to claim 1 or 2, wherein
the correction phase calculation unit (27) selects a plurality of top observation coordinates having larger reflection intensity from among the observation coordinates included in the power composite image, and calculates, as the correction phase, an average of phases of each of the frequencies at the plurality of top observation coordinates.

5. The object scanning device according to claim 4, wherein
the correction phase calculation unit (27) extracts, from among a plurality of observation coordinates included in the plurality of top observation coordinates, a plurality of observation coordinates that form a combination having a smallest phase difference of each of the frequencies, and calculates, as the correction phase, an average of phases of each of the frequencies at the plurality of observation coordinates extracted.

6. The object scanning device (10A) according to any one of claim 1 or 2, wherein
the radio waves are signals in a sub-terahertz to terahertz range.

7. An object scanning method for generating a phase composite image of an object (30) that is a measurement subject disposed in a measurement area based on receiving, while changing a frequency and a transmission/reception antenna position, reflected waves (W) of radio waves including a plurality of frequencies radiated to the object(30), the object scanning method comprising:

generating, by a control circuit, a phase composite image by means of a matched filter of phase composing type that involves performing complex addition of correlation vectors for each pixel based on a correction phase, reception waveform data, frequency data, and position data;
generating a power composite image by using a matched filter of power composing type that involves integrating, for each pixel, correlation vectors indicating a correlation between estimated waveforms of the reflected waves (W) and reception waveform data based on the reception waveform data, the position data, and the frequency data, wherein the reception waveform data is generated from a baseband signal that is a complex signal generated using a reception signal and a high frequency signal, the reception waveform data being data of waveforms of the reflected waves (W) emitted from a transmission antenna (11), reflected by the object (30), and received by a reception antenna (12), the position data indicating a position of the transmission antenna (11) and the reception antenna (12) with respect to the object (30), the frequency data being data of the frequencies of radio waves emitted from the transmission antenna (11); and
a calculating step of performing, based on the power composite image, the reception waveform data, the position data, and the frequency data, a process of searching the power composite image for an observation coordinate indicating a maximum reflection intensity, and a process of calculating, for each frequency, a phase of the correlation vectors at the observation coordinate indicating the maximum reflection intensity as the correction phase to be used for phase correction,
wherein the method further comprises:

either moving the transmission antenna (11) and the reception antenna (12) according to a predetermined antenna moving path (71) along a circle of movement surrounding the object (30); or
controlling a rotational position of a rotation table rotating with the object (30) placed thereon;
wherein the changing a frequency and a transmission/reception antenna position comprises that frequencies are repeated in a certain range stepwise with respect to the transmission/reception antenna position set by the position control unit (25).

**Patentansprüche**

1. Objektabtasteinrichtung (10A), eingerichtet zum:
Erzeugen eines Phasenkompositbildes eines Objekts (30), das ein Messsubjekt ist, das in einem Messbereich angeordnet ist, auf Grundlage des Empfangs von reflektierten Wellen (W) von Funkwellen, die eine Vielzahl von Frequenzen umfassen, die zu dem Objekt (30) ausgestrahlt werden, während eine Frequenz und eine Sende-/ Empfangsantennenposition geändert werden, wobei die Objektabtasteinrichtung (10A) umfasst:

eine Sendeantenne (11), eine Empfangsantenne (12), eine Quadraturerfassungseinheit (21), eine Hochfrequenzsignalerzeugungseinheit (24), eine Wellenformaufzeichnungseinheit (22), eine Positionssteuereinheit (25), eine Frequenzsteuereinheit (23), eine Energiekompositbilderzeugungseinheit (26), eine Korrekturphasenberechnungseinheit (27) und eine Phasenkompositbilderzeugungseinheit (28), eingerichtet zum: Erzeugen eines Phasenkompositbildes unter Verwendung einer Korrekturphase,

wobei die Wellenformaufzeichnungseinheit (22) eingerichtet ist zum: Erzeugen von Empfangswellenformdaten aus einem Basisbandsignal, das ein komplexes Signal ist, das von der Quadraturerfassungseinheit (21) unter Verwendung eines Empfangssignals von der Empfangsantenne (12) und eines Hochfrequenzsignals von der Hochfrequenzsignalerzeugungseinheit (24) erzeugt wird, und Aufzeichnen der Empfangswellenformdaten, und zusätzlich von Positionsdaten, die von der Positionssteuereinheit (25) ausgegeben werden, und von Frequenzdaten, die von der Frequenzsteuereinheit (23) in Verbindung mit den Empfangswellenformdaten ausgegeben werden,

wobei die Energiekompositbilderzeugungseinheit (26) eingerichtet ist, ein Energiekompositbild zu erzeugen, in das Bilder des Messsubjekts bei den Frequenzen unter Verwendung eines Abbildungsverfahrens mit einem angepassten Filter vom Energiekomposittyp zusammengesetzt werden, das für jedes Pixel die Integration von Korrelationsvektoren beinhaltet, die eine Korrelation zwischen ermittelten Wellenformen der reflektierten Wellen (W) und den Empfangswellenformdaten auf der Grundlage der Empfangswellenformdaten, der Positionsdaten und der Frequenzdaten angeben, wobei die Empfangswellenformdaten Daten von Wellenformen der reflektierten Wellen (W) sind, die von einer Sendeantenne (11) ausgesendet, von dem Objekt (30) reflektiert und von der Empfangsantenne (12) empfangen werden, wobei die Positionsdaten eine Position der Sendeantenne (11) und der Empfangsantenne (12) in Bezug auf das Objekt (30) angeben, wobei die Frequenzdaten Daten über die Frequenzen der von der Sendeantenne (11) ausgestrahlten Funkwellen sind; und

die Korrekturphasenberechnungseinheit (27) eingerichtet ist, auf der Grundlage des Energiekompositbildes, der Empfangswellenformdaten, der Positionsdaten und der Frequenzdaten einen Prozess des Durchsuchens des Energiekompositbildes nach einer Beobachtungskoordinate, die eine maximale Reflexionsintensität angibt, und einen Prozess des Berechnens einer Phase der Korrelationsvektoren an der Beobachtungskoordinate, die die maximale Reflexionsintensität angibt, für jede Frequenz als die für die Phasenkorrektur zu verwendende Korrekturphase auszuführen,

wobei die Phasenkompositbilderzeugungseinheit (28) eingerichtet ist, das Phasenkompositbild zu erzeugen, in das Bilder des Messsubjekts bei den Frequenzen unter Verwendung eines Abbildungsverfahrens mit einem angepassten Filter vom Phasenkomposittyp zusammengesetzt werden, das die Durchführung einer komplexen Zufügung der Korrelationsvektoren für jedes Pixel auf Grundlage der Korrekturphase, der Empfangswellenformdaten, der Positionsdaten und der Frequenzdaten beinhaltet,

wobei die Steuereinheit (25) eingerichtet um:

entweder die Sendeantenne (11) und die Empfangsantenne (12) gemäß einem vorbestimmten Antennenbewegungspfad (71) entlang eines das Objekt (30) umgebenden Bewegungskreises zu bewegen; oder eine Rotationsposition eines Rotationstisches (50), der in der Objektabtasteinrichtung enthalten ist und mit dem darauf befindlichen Objekt (30) rotiert, zu steuern;

wobei die Änderung einer Frequenz und einer Sende-/ Empfangsantennenposition umfasst, dass Frequenzen in einem bestimmten Bereich schrittweise in Bezug auf die von der Positionssteuereinheit (25) eingestellte Sende-/ Empfangsantennenposition wiederholt werden.

2. Objektabtasteinrichtung (10A) nach Anspruch 1, wobei
bei der Erzeugung des Phasenkompositbildes die Phasenkompositbilderzeugungseinheit (28) die Korrekturphase für jede der Frequenzen von einem Phasenversatz der Korrelationsvektoren subtrahiert.

3. Objektabtasteinrichtung nach Anspruch 1 oder 2, wobei
die Korrekturphasenberechnungseinheit (27) nach einer Koordinate der maximalen Reflexionsintensität sucht, die eine maximale Reflexionsintensität unter den Beobachtungskoordinaten angibt, die in dem Energiekompositbild enthalten sind, und eine Phase jeder der Frequenzen an der Koordinate der maximalen Reflexionsintensität als die Korrekturphase berechnet.

4. Objektabtasteinrichtung nach Anspruch 1 oder 2, wobei
die Korrekturphasenberechnungseinheit (27) eine Vielzahl von oberen Beobachtungskoordinaten, die eine größere Reflexionsintensität aufweisen, aus den Beobachtungskoordinaten auswählt, die in dem Energiekompositbild enthalten sind, und als die Korrekturphase einen Mittelwert von Phasen jeder der Frequenzen an der Vielzahl von oberen Beobachtungskoordinaten berechnet.

5. Objektabtasteinrichtung nach Anspruch 4, wobei
die Korrekturphasenberechnungseinheit (27) aus einer Vielzahl von Beobachtungskoordinaten, die in der Vielzahl von oberen Beobachtungskoordinaten enthalten sind, eine Vielzahl von Beobachtungskoordinaten extrahiert, die eine Kombination bilden, die eine kleinste Phasendifferenz jeder der Frequenzen aufweist, und als die Korrekturphase einen Mittelwert von Phasen jeder der Frequenzen bei der Vielzahl von extrahierten Beobachtungskoordinaten berechnet.

6. Objektabtasteinrichtung (10A) nach einem der Ansprüche 1 oder 2, wobei
die Funkwellen Signale im Sub-Terahertz- bis Terahertz-Bereich sind.

7. Objektabtastverfahren zum Erzeugen eines Phasenkompositbildes eines Objekts (30), das ein Messsubjekt ist, das in einem Messbereich angeordnet ist, auf Grundlage des Empfangs von reflektierten Wellen (W) von Funkwellen, die eine Vielzahl von Frequenzen umfassen, die zu dem Objekt (30) ausgestrahlt werden, während eine Frequenz und eine Sende-/Empfangsantennenposition geändert werden, wobei das Objektabtastverfahren umfasst:

Erzeugen, durch eine Steuerschaltung, eines Phasenkompositbildes mittels eines angepassten Filters vom Phasenkomposittyp, das die Durchführung einer komplexen Zufügung von Korrelationsvektoren für jedes Pixel auf der Grundlage einer Korrekturphase, von Empfangswellenformdaten, Frequenzdaten und Positionsdaten beinhaltet;
Erzeugen eines Energiekompositbildes unter Verwendung eines angepassten Filters vom Energiekomposittyp, das für jedes Pixel die Integration von Korrelationsvektoren beinhaltet, die eine Korrelation zwischen ermittelten Wellenformen der reflektierten Wellen (W) und Empfangswellenformdaten auf der Grundlage der Empfangswellenformdaten, der Positionsdaten und der Frequenzdaten angeben, wobei die Empfangswellenformdaten aus einem Basisbandsignal erzeugt werden, das ein komplexes Signal ist, das unter Verwendung eines Empfangssignals und eines Hochfrequenzsignals erzeugt wird, wobei die Empfangswellenformdaten Daten von Wellenformen der reflektierten Wellen (W) sind, die von einer Sendeantenne (11) ausgesendet, von dem Objekt (30) reflektiert und von einer Empfangsantenne (12) empfangen werden, wobei die Positionsdaten eine Position der Sendeantenne (11) und der Empfangsantenne (12) in Bezug auf das Objekt (30) angeben, wobei die Frequenzdaten Daten der Frequenzen der von der Sendeantenne (11) ausgestrahlten Funkwellen sind; und
einen Berechnungsschritt der Durchführung, auf der Grundlage des Energiekompositbildes, der Empfangswellenformdaten, der Positionsdaten und der Frequenzdaten, eines Prozesses des Durchsuchens des Energiekompositbildes nach einer Beobachtungskoordinate, die eine maximale Reflexionsintensität angibt, und eines Prozesses des Berechnens einer Phase der Korrelationsvektoren an der Beobachtungskoordinate, die die maximale Reflexionsintensität angibt, für jede Frequenz als die für die Phasenkorrektur zu verwendende Korrekturphase,
wobei das Verfahren ferner umfasst:

entweder Bewegen der Sendeantenne (11) und der Empfangsantenne (12) gemäß einem vorbestimmten Antennenbewegungspfad (71) entlang eines Bewegungskreises um das Objekt (30); oder
Steuern einer Rotationsposition eines Rotationstisches, der in der Objektabtasteinrichtung enthalten ist und mit dem darauf befindlichen Objekt (30) rotiert;
wobei die Änderung einer Frequenz und einer Sende-/ Empfangsantennenposition umfasst, dass Frequenzen in einem bestimmten Bereich schrittweise in Bezug auf die von der Positionssteuereinheit (25) eingestellte Sende-/ Empfangsantennenposition wiederholt werden.

**Revendications**

1. Dispositif de balayage d'objet (10A) configuré pour :
générer une image composite de phase d'un objet (30) qui est un sujet de mesure disposé dans une zone de mesure sur la base de la réception, tout en changeant une fréquence et une position d'antenne d'émission/réception, d'ondes réfléchies (W) d'ondes radio comprenant une pluralité de fréquences rayonnées vers l'objet (30), le dispositif de balayage d'objet (10A) comprenant :

une antenne d'émission (11), une antenne de réception (12), une unité de détection en quadrature (21), une unité de génération de signaux haute fréquence (24), une unité d'enregistrement de formes d'ondes (22), une unité de contrôle de position (25), une unité de contrôle de fréquence (23), une unité de génération d'image composite de puissance (26), une unité de calcul de phase de correction (27) et une unité de génération d'image composite de phase (28) configurée pour : générer une image composite de phase en utilisant une phase de correction, dans lequel l'unité d'enregistrement de forme d'onde (22) est configurée pour : générer des données de forme d'onde de réception à partir d'un signal en bande de base qui est un signal complexe généré, par l'unité de détection en quadrature (21), en utilisant un signal de réception provenant de l'antenne de réception (12) et un signal haute fréquence provenant de l'unité de génération de signaux haute fréquence (24), et enregistrer les données de forme d'onde de réception, ainsi que des données de position émises par l'unité de contrôle de position (25) et des données de fréquence émises par l'unité de contrôle de fréquence (23) en association avec les données de forme d'onde de réception,

dans lequel l'unité de génération d'image composite de puissance (26) est configurée pour générer une image composite de puissance dans laquelle les images du sujet de mesure aux différentes fréquences sont composées en utilisant un procédé d'imagerie avec un filtre adapté de type de composition de puissance, qui implique l'intégration, pour chaque pixel, de vecteurs de corrélation indiquant une corrélation entre des formes d'onde estimées des ondes réfléchies (W) et les données de forme d'onde de réception fondées sur les données de forme d'onde de réception, les données de position et les données de fréquence, les données de forme d'onde de réception étant des données de forme d'onde des ondes réfléchies (W) émises par une antenne d'émission (11), réfléchies par l'objet (30) et reçues par l'antenne de réception (12), les données de position indiquant une position de l'antenne d'émission (11) et de l'antenne de réception (12) par rapport à l'objet (30), les données de fréquence étant des données sur les fréquences des ondes radio émises par l'antenne d'émission (11) ; et l'unité de calcul de phase de correction (27) est configurée pour exécuter, sur la base de l'image composite de puissance, des données de forme d'onde de réception, des données de position et des données de fréquence, un processus de recherche dans l'image composite de puissance d'une coordonnée d'observation indiquant une intensité de réflexion maximale, et un processus de calcul, pour chaque fréquence, d'une phase des vecteurs de corrélation à la coordonnée d'observation indiquant l'intensité de réflexion maximale comme la phase de correction à utiliser pour la correction de phase,

dans lequel l'unité de génération d'image composite de phase (28) est configurée pour générer l'image composite de phase dans laquelle les images du sujet de mesure aux différentes fréquences sont composées en utilisant un procédé d'imagerie avec un filtre adapté de type de composition de phase qui implique l'addition complexe des vecteurs de corrélation pour chaque pixel sur la base de la phase de correction, des données de forme d'onde de réception, des données de position et des données de fréquence,

dans lequel l'unité de contrôle de position (25) est configurée pour :

soit déplacer l'antenne d'émission (11) et l'antenne de réception (12) selon une trajectoire de déplacement d'antenne (71) prédéterminée le long d'un cercle de déplacement entourant l'objet (30) ; soit contrôler une position angulaire d'une table de rotation (50) incluse dans le dispositif de balayage d'objet et tournant avec l'objet (30) placé sur celle-ci ;

dans lequel la modification d'une fréquence et d'une position d'antenne d'émission/réception comprend la répétition des fréquences dans une certaine plage par incréments par rapport à la position d'antenne d'émission/réception définie par l'unité de contrôle de position (25).

2. Dispositif de balayage d'objet (10A) selon la revendication 1, dans lequel
lors de la génération de l'image composite de phase, l'unité de génération d'image composite de phase (28) soustrait, pour chacune des fréquences, la phase de correction à un décalage de phase des vecteurs de corrélation.

3. Dispositif de balayage d'objet selon la revendication 1 ou 2, dans lequel
l'unité de calcul de phase de correction (27) recherche, parmi les coordonnées d'observation incluses dans l'image composite de puissance, une coordonnée d'intensité de réflexion maximale indiquant une intensité de réflexion maximale, et calcule une phase de chacune des fréquences à la coordonnée d'intensité de réflexion maximale comme la phase de correction.

4. Dispositif de balayage d'objet selon la revendication 1 ou 2, dans lequel
l'unité de calcul de phase de correction (27) sélectionne une pluralité de coordonnées d'observation principales ayant une intensité de réflexion plus importante parmi les coordonnées d'observation incluses dans l'image composite de puissance, et calcule, comme la phase de correction, une moyenne des phases de chacune des fréquences à la pluralité de coordonnées d'observation principales.

**5.** Dispositif de balayage d'objet selon la revendication 4, dans lequel
l'unité de calcul de phase de correction (27) extrait, d'une pluralité de coordonnées d'observation incluses dans la pluralité de coordonnées d'observation principales, une pluralité de coordonnées d'observation qui forment une combinaison présentant la plus petite différence de phase pour chacune des fréquences, et calcule, comme la phase de correction, une moyenne des phases de chacune des fréquences à la pluralité de coordonnées d'observation extraites.

**6.** Dispositif de balayage d'objet (10A) selon l'une quelconque des revendications 1 ou 2, dans lequel
les ondes radio sont des signaux dans une gamme allant du sous-térahertz au térahertz.

**7.** Procédé de balayage d'objet pour générer une image composite de phase d'un objet (30) qui est un sujet de mesure disposé dans une zone de mesure sur la base de la réception, tout en changeant une fréquence et une position d'antenne d'émission/réception, d'ondes réfléchies (W) d'ondes radio comprenant une pluralité de fréquences rayonnées vers l'objet (30), le procédé de balayage d'objet comprenant :

la génération, par un circuit de commande, d'une image composite de phase au moyen d'un filtre adapté de type de composition de phase qui implique l'addition complexe de vecteurs de corrélation pour chaque pixel sur la base d'une phase de correction, de données de forme d'onde de réception, de données de fréquence et de données de position ;

la génération d'une image composite de puissance en utilisant un filtre adapté de type de composition de puissance qui implique l'intégration, pour chaque pixel, de vecteurs de corrélation indiquant une corrélation entre des formes d'onde estimées des ondes réfléchies (W) et les données de forme d'onde de réception fondées sur les données de forme d'onde de réception, les données de position et les données de fréquence, dans lequel les données de forme d'onde de réception sont générées à partir d'un signal en bande de base qui est un signal complexe généré à l'aide d'un signal de réception et d'un signal à haute fréquence, les données de forme d'onde de réception étant des données de formes d'onde des ondes réfléchies (W) émises par une antenne d'émission (11), réfléchies par l'objet (30) et reçues par une antenne de réception (12), les données de position indiquant une position de l'antenne d'émission (11) et de l'antenne de réception (12) par rapport à l'objet (30), les données de fréquence étant des données sur les fréquences des ondes radio émises par l'antenne d'émission (11) ; et

une étape de calcul consistant à réaliser, sur la base de l'image composite de puissance, des données de forme d'onde de réception, des données de position et des données de fréquence, un processus de recherche dans l'image composite de puissance d'une coordonnée d'observation indiquant une intensité de réflexion maximale, et un processus de calcul, pour chaque fréquence, d'une phase des vecteurs de corrélation à la coordonnée d'observation indiquant l'intensité de réflexion maximale comme la phase de correction à utiliser pour la correction de phase,

dans lequel le procédé comprend en outre :

soit le déplacement de l'antenne d'émission (11) et de l'antenne de réception (12) selon une trajectoire de déplacement d'antenne (71) prédéterminée le long d'un cercle de déplacement entourant l'objet (30) ; soit le contrôle d'une position angulaire d'une table de rotation tournant avec l'objet (30) placé sur celle-ci ;

dans lequel la modification d'une fréquence et d'une position d'antenne d'émission/réception comprend la répétition des fréquences dans une certaine plage par incréments par rapport à la position d'antenne d'émission/réception définie par l'unité de contrôle de position (25).

# FIG.1

# FIG.2

POSITION
DATA

POSITION
CONTROL
UNIT

# FIG.3

REFLECTED WAVE
(SCATTERING POINT 1A)

REFLECTED WAVE
(SCATTERING POINT 1B)

REFLECTED WAVE
(SCATTERING POINT 1C)

SUPERIMPOSE

RECEPTION
WAVEFORM

# FIG.4

# FIG.5

RECEPTION
WAVEFORM

CORRELATION
PROCESSING

ESTIMATED
WAVEFORM AT
OBSERVATION
POINT 2A

ESTIMATED
WAVEFORM AT
OBSERVATION
POINT 2B

ESTIMATED
WAVEFORM AT
OBSERVATION
POINT 2C

CORRELATION
RESULT

# FIG.6

# FIG.7

# FIG.8

| FREQUENCY DATA | POSITION DATA | RECEPTION WAVEFORM DATA |
|---|---|---|
| F1 | P1 | r1 |
| F2 | P2 | r2 |
| F3 | P3 | r3 |
| ⋮ | ⋮ | ⋮ |
| F1 | P10 | r10 |
| F2 | P11 | r11 |
| F3 | P12 | r12 |
| ⋮ | ⋮ | ⋮ |
| F1 | P19 | r19 |
| F2 | P20 | r20 |
| F3 | P21 | r21 |
| ⋮ | ⋮ | ⋮ |

44

RECEPTION WAVEFORM DATA FREQUENCY DATA POSITION DATA

41

42 ADC

43 ADC

COMPLEX SIGNAL

22

WAVEFORM RECORDING UNIT

EP 4 266 030 B1

# FIG.9

ADDITIVE COMBINING

| FREQUENCY DATA | POSITION DATA | RECEPTION WAVEFORM DATA |
|---|---|---|
| F1 | P1 | r1 |
| F2 | P2 | r2 |
| F3 | P3 | r3 |
| ⋮ | ⋮ | ⋮ |
| F1 | P10 | r10 |
| F2 | P11 | r11 |
| F3 | P12 | r12 |
| ⋮ | ⋮ | ⋮ |
| F1 | P19 | r19 |
| F2 | P20 | r20 |
| F3 | P21 | r21 |
| ⋮ | ⋮ | ⋮ |

EP 4 266 030 B1

# FIG.10

CORRECTION PHASE
Arg($c_A(\lambda)$) FOR
FREQUENCY F1

PHASE OF FREQUENCY F1
AT OBSERVATION POINT 2A

CORRECTION PHASE
Arg($c_A(\lambda)$) FOR
FREQUENCY F2

PHASE OF FREQUENCY F2
AT OBSERVATION POINT 2A

CORRECTION PHASE
Arg($c_A(\lambda)$) FOR
FREQUENCY F3

PHASE OF FREQUENCY F3
AT OBSERVATION POINT 2A

| FREQUENCY DATA | POSITION DATA | RECEPTION WAVEFORM DATA |
|---|---|---|
| F1 | P1 | r1 |
| F2 | P2 | r2 |
| F3 | P3 | r3 |
| ⋮ | ⋮ | ⋮ |
| F1 | P10 | r10 |
| F2 | P11 | r11 |
| F3 | P12 | r12 |
| ⋮ | ⋮ | ⋮ |
| F1 | P19 | r19 |
| F2 | P20 | r20 |
| F3 | P21 | r21 |
| ⋮ | ⋮ | ⋮ |

44

55

2A

2C

2B

MAXIMUM REFLECTION INTENSITY COORDINATES:
OBSERVATION POINT 2A

FIG.11

# FIG.12

INITIAL STATE

S10

RECORD RECEPTION WAVEFORM DATA WHILE
CHANGING FREQUENCY AND TRANSMISSION/
RECEPTION ANTENNA POSITION

S20

GENERATE POWER COMPOSITE IMAGE

S30

SEARCH POWER COMPOSITE IMAGE FOR
MAXIMUM REFLECTION INTENSITY COORDINATES

S40

CALCULATE, FOR EACH FREQUENCY, PHASE OF
CORRELATION VECTOR AT MAXIMUM REFLECTION
INTENSITY COORDINATES AS CORRECTION PHASE

S50

GENERATE PHASE COMPOSITE IMAGE USING
CORRECTION PHASE

END

# FIG.13

EP 4 266 030 B1

# FIG.14

INITIAL STATE

S110

RECORD RECEPTION WAVEFORM DATA WHILE CHANGING FREQUENCY AND TRANSMISSION/RECEPTION ANTENNA POSITION

S120

GENERATE POWER COMPOSITE IMAGE

S130

SELECT TOP M OBSERVATION COORDINATES HAVING HIGHER REFLECTION INTENSITY FROM AMONG OBSERVATION COORDINATES IN POWER COMPOSITE IMAGE

S140

SELECT x OBSERVATION POINTS THAT ARE CLOSEST IN PHASE OF EACH FREQUENCY FROM AMONG TOP M OBSERVATION COORDINATES

S150

OBTAIN CORRECTION PHASE VECTOR AT EACH FREQUENCY WITH RESPECT TO EACH OF SELECTED x OBSERVATION POINTS, AND CALCULATE AVERAGE OF CORRECTION PHASE VECTORS FOR EACH FREQUENCY

S160

GENERATE PHASE COMPOSITE IMAGE USING AVERAGE OF CORRECTION PHASE VECTORS OBTAINED FOR EACH FREQUENCY WITH RESPECT TO x OBSERVATION POINTS

END

# FIG.15

| SET L OF OBSERVATION COORDINATES | SUM OF EUCLIDEAN DISTANCES |
|---|---|
| $\{P_1, P_2, P_3\}$ | $\|P_1-P_2\|+\|P_1-P_3\|+\|P_2-P_3\|$ |
| $\{P_1, P_2, P_4\}$ | $\|P_1-P_2\|+\|P_1-P_4\|+\|P_2-P_4\|$ |
| $\{P_1, P_3, P_4\}$ | $\|P_1-P_3\|+\|P_1-P_4\|+\|P_3-P_4\|$ |
| $\{P_2, P_3, P_4\}$ | $\|P_2-P_3\|+\|P_2-P_4\|+\|P_3-P_4\|$ |

# FIG.16

# FIG.17

**EP 4 266 030 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007256171 A
- US 2019179007 A1
- US 2005237056 A1
- US 2007222671 A1